# EUROPÄISCHE PATENTSCHRIFT

(11) **EP 0 966 627 B1**
(45) Veröffentlichungstag und Bekanntmachung des Hinweises auf die Patenterteilung: **23.07.2003**
(21) Anmeldenummer: 98912219.7
(22) Anmeldetag: 14.02.1998
(51) Int. Cl.: B60K 6/10, F02N 11/04

(54) **GETRIEBEINTEGRIERTE ELEKTROMASCHINE FÜR KRAFTFAHRZEUG-BRENNKRAFTMASCHINEN UND DEREN STEUERUNG**
GEARBOX-INTEGRATED ELECTRIC MACHINE FOR MOTOR VEHICLE INTERNAL COMBUSTION ENGINES AND ITS CONTROL
MACHINE ELECTRIQUE INTEGREE DANS LA BOITE DE VITESSES DU MOTEUR A COMBUSTION INTERNE D'UN VEHICULE A MOTEUR ET SON PROCEDE DE COMMANDE

(30) Priorität: 11.03.1997 DE 19709675; 20.10.1997 DE 19745995
(43) Veröffentlichungstag der Anmeldung: 29.12.1999
(73) Patentinhaber: ROBERT BOSCH GMBH, 70442 Stuttgart (DE)
(72) Erfinder: KOELLE, Gerhard, D-75446 Wiernsheim (DE); AHNER, Peter, D-71032 Böblingen (DE); BOLZ, Martin-Peter, D-71720 Oberstenfeld (DE); GLAUNING, Juergen, D-71711 Steinheim (DE)
(86) Internationale Anmeldenummer: DE9800422
(87) Internationale Veröffentlichungsnummer: WO98040647

(56) Entgegenhaltungen:
- EP-A- 0 492 152
- EP-A- 0 539 339
- DE-A- 4 225 315
- DE-A- 19 730 858
- FR-A- 2 748 428
- US-A- 5 603 242

## Beschreibung

Die Erfindung betrifft eine getriebeintegrierte Elektromaschine für Kraftfahrzeug-Brennkraftmaschinen sowie deren Steuerung mit den im Oberbegriff des Patentanspruchs 1 genannten Merkmalen.

### Stand der Technik

Die ältere Patentanmeldung DE 196 29 839.3 beschreibt eine Brennkraftmaschine für Kraftfahrzeuge, mit einem auf die Antriebsräder des Kraftfahrzeuges wirkenden Getriebe, wobei eine Getriebeeingangswelle mit einer Abtriebswelle der Brennkraftmaschine kuppelbar ist, und mit einer elektrischen Maschine, die über ein Zwischengetriebe mit dem Getriebe kuppelbar ist und die sowohl als Startermotor zum Andrehen der Brennkraftmaschine als auch als Generator zur energetischen Versorgung eines elektrischen Bordnetzes des Kraftfahrzeuges umschaltbar ist.

Die Getriebesynchronisation, das heißt die Drehzahlanpassung der in Eingriff zu bringenden Getrieberäder beim Wechseln der Übersetzungsstufen, erfolgt bei bekannten Kraftfahrzeug-Schaltgetrieben mit Hilfe von formschlüssigen Kupplungselementen mit Sperrsynchronisierung. Diese Kupplungselemente verlangen einerseits einen gewissen Bauaufwand und unterliegen im Betrieb aufgrund Ihrer relativ hohen mechanischen Belastung einem nicht unerheblichen Verschleiß mit dem Effekt, daß die Synchronisationswirkung sich verschlechtert.

Ferner ist aus der EP 0 716 947 A ein Antriebsaggregat für Kraftfahrzeuge mit einer Brennkraftmaschine und ein auf die Antriebsräder des Kraftfahrzeugs wirkendes Hauptgetriebe bekannt, wobei eine Getriebeeingangswelle mit einer Abtriebswelle der Brennkraftmaschine kuppelbar ist. Ferner enthält das Antriebsaggregat eine elektrische Maschine, die über ein veränderbares Zwischengetriebe mit dem Getriebe kuppelbar ist und die als Startermotor zum Andrehen der Brennkraftmaschine und als Generator zur Versorgung eines Bordnetzes des Kraftfahrzeugs umschaltbar ist. Somit sind aus der EP 0 716 947 A die Merkmale des Oberbegriffs des Anspruchs 1 bekannt.

Der Erfindung liegt die Aufgabe zugrunde, die Komponenten Starter, Generator und Getriebesynchronisation in einer Einheit zusammenzufassen sowie für deren gemeinsame Steuerung zu sorgen.

### Vorteile der Erfindung

Das erfindungsgemäße Antriebsaggregat mit den im Patentanspruch 1 genannten Merkmalen bietet den Vorteil, daß die Brennkraftmaschine in einfacher Weise durch eine als Startermotor geschaltete elektrische Maschine gestartet werden kann, und bei sich in Betrieb befindender Brennkraftmaschine eine Versorgung des Bordnetzes des Kraftfahrzeugs über den als Generator geschaltete elektrische Maschine möglich ist. Die Abtriebswelle der Brennkraftmaschine steht mit der Getriebeeingangswelle in trennbarer Verbindung. Diese Verbindung wird über mindestens eine steuerbare Kupplung sowie ein damit verbundenes Schwungrad hergestellt. An der Getriebeeingangswelle ist weiterhin ein schaltbares Zwischengetriebe vorgesehen, über welches die elektrische Maschine wirkverbunden ist. Dieses Zwischengetriebe kann in seiner Übersetzung geändert werden, um je nach Motordrehzahl den Generator im günstigen Wirkungsgradbereich betreiben zu können und beim Betrieb als Startermotor ein ausreichendes Drehmoment liefern zu können. Diese Übersetzungsstufen können beispielsweise 1:2 und 1:5 betragen.

Die elektrische Maschine kann auf verschiedenartige Weise mit der Getriebeeingangswelle verbunden sein. Möglich ist beispielsweise eine Wirkverbindung über eine Zwischenwelle mit zwei Zahnradpaaren, die je nach gewünschter Übersetzung der elektrischen Maschine mittels zweier an den Zahnrädern befindlichen steuerbaren Kupplungen an die Getriebeeingangswelle angekuppelt wird. Ebenso möglich ist die Ausbildung der Rotorwelle der elektrischen Maschine mit jeweils einem frei gelagerten Zahnrad am Ende, die mit jeweils einem Gegenzahnrad auf der Getriebeeingangswelle im Eingriff stehen und die über jeweils eine steuerbare Kupplung mit der Rotorwelle in Wirkverbindung zu bringen sind.

Die elektrische Maschine sowie die Kupplungen werden zweckmäßigerweise von einem elektronischen Steuergerät gesteuert, das aufgrund der erfaßten Informationen wie der Motordrehzahl, der Drehzahlen der Antriebsräder sowie der gewünschten Schaltstufe beim Wechsel der Getriebestufen die Kupplungen und damit die Übersetzung der elektrischen Maschine steuert. Auch kann auf diese Weise leicht die richtige Funktion der elektrischen Maschine je nach Betriebszustand, als Starter oder Generator geschaltet, eingestellt und gesteuert werden.

Vorteilhaft ist ferner eine Synchronisierbarkeit beim Schalten des Hauptgetriebes mit Hilfe einer Massenträgheit sowie einer elektrischen Leistung der elektrischen Maschine. Dadurch, daß gemäß Kennzeichen des Anspruchs 1 die Abtriebswelle der Brennkraftmaschine und die Getriebeeingangswelle des Hauptgetriebes über jeweils eine Kupplung mit einer Schwungmasse- kuppelbar ist, und die Schwungmasse mit dem Zusatzgetriebe (Zwischengetriebe) in Wirkeingriff steht, ist es vorteilhaft, über die Schwungrad-Zwischengetriebe-Kombination eine Synchronisation des Hauptgetriebes zu erreichen. Bei einem Wechsel zu einer niedrigeren Schaltstufe kann die elektrische Maschine in einer Schaltung als Elektromotor jeweils das langsamer laufende Zahnrad des zu kuppelnden Zahnradpaares beschleunigen, wodurch die Drehzahlen exakt anpaßbar sind. Beim Wechsel in eine höhere Schaltstufe kann die elektrische Maschine, nunmehr als Generator mit steuerbarer elektrischer Last geschaltet, das schneller laufende Zahnrad abbremsen. Eine derartige Getriebesynchronisation kann völlig auf mechanische Synchronisierkupplungen im Getriebe verzichten, die einer hohen Belastung und damit unvermeidbarem Verschleiß unterliegen.

Durch die räumliche Zusammenfassung von Starter und Generator in einem einzigen Bauteil ist weiterhin der Bau- und Montageaufwand deutlich reduziert, was einerseits einen Kostenvorteil erbringt. Da auch der Raumbedarf an der Brennkraftmaschine reduziert ist,
folgt eine erhöhte konstruktive Freiheit bei dessen Positionierung im Fahrzeug sowie der Plazierung der Nebenaggregate. Die herkömmlichen Fertigungsanlagen sowie das Know-how für die Herstellung von Startern und Generatoren können weiterverwendet werden. Verschiedene Bauteile entsprechen unverändert der heutigen Serie von Startern und Generatoren.

Vorteilhaft ist weiterhin, wenn die erfindungsgemäße Starter-Generator-Maschine flüssigkeitsgekühlt wird, was durch einen Anschluß an den Wasserkühlkreislauf der Brennkraftmaschine erfolgen kann. Ebenso möglich ist jedoch auch eine Luftkühlung, bei der die ausreichende Versorgung mit kühlender Luft zweckmäßigerweise durch ein dauernd laufendes Kühlgebläse erfolgt.

Vorteilhaft ist schließlich, wenn die Starter-Generator-Maschine und insbesondere das umschaltbare Planetengetriebe ölgeschmiert sind, was zweckmäßigerweise durch eine Versorgung mit dem Getriebeöl des Schaltgetriebes erfolgen kann.

Weitere vorteilhafte Ausgestaltungen der Erfindung ergeben sich aus den übrigen, in den Unteransprüchen genannten, Merkmalen.

### Zeichnungen

Die Erfindung wird nachfolgend in Ausführungsbeispielen anhand der zugehörigen Zeichnungen näher erläutert. Es zeigen:
- Figur 1: eine Prinzipdarstellung eines Antriebsaggregates eines Kraftfahrzeuges in einer ersten Variante;
- Figur 2: eine Prinzipdarstellung eines Antriebsaggregates eines Kraftfahrzeuges in einer zweiten Variante;
- Figur 3: eine Schnittdarstellung der Variante aus Figur 1 sowie eine Draufsicht derselben;
- Figur 4: eine Schnittdarstellung einer weiteren Variante zum Aufbau nach Figur 3;
- Figur 5: ein Drehzahlendiagramm für verschiedene Übersetzungsverhältnisse der elektrischen Maschine;
- Figur 6: ein Ablaufdiagramm einer Steuerung zur Getriebesynchronisation und
- Figur 7: ein Ablaufdiagramm einer Getriebesteuerung im Generatorbetrieb der elektrischen Maschine.

### Beschreibung der Ausführungsbeispiele

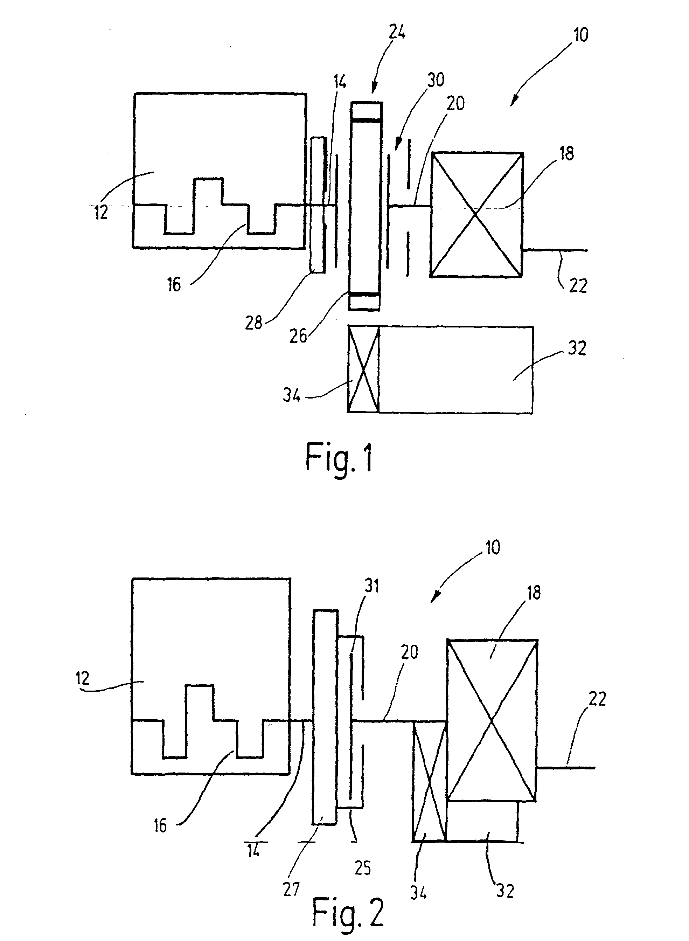

Figur 1 zeigt eine erste mögliche Variante eines Antriebsaggregates 10 eines Kraftfahrzeuges in einer schematischen Prinzipskizze. Das Antriebsaggregat 10 umfaßt eine Brennkraftmaschine 12, dessen Abtriebswelle 14 über eine von im einzelnen nicht dargestellten Zylindern gekoppelte Kurbelwelle 16 drehfest verbunden ist. Das Antriebsaggregat 10 umfaßt weiterhin ein Hauptgetriebe 18, das eine Getriebeeingangswelle 20 und eine Getriebeausgangswelle 22 umfaßt. Die Getriebeausgangswelle 22 ist mit nicht dargestellten Antriebsrädern des Kraftfahrzeuges wirkverbunden. Zwischen der Brennkraftmaschine 12 und dem Hauptgetriebe 18 ist eine Schwungmasse 24 angeordnet, die beispielsweise von einem Zwei-Massen-Schwungrad 26 gebildet ist. Eine Drehachse der Schwungmasse 24 fällt hierbei mit einer Drehachse der Antriebswelle 14 sowie der Getriebeeingangswelle 20 zusammen. Zwischen der Brennkraftmaschine 12 und der Schwungmasse 24 ist eine erste Kupplung 28 und zwischen der Schwungmasse 24 und dem Hauptgetriebe 18 eine zweite Kupplung 30 angeordnet. Das Antriebsaggregat 10 umfaßt ferner eine elektrische Maschine 32, die über eine im einzelnen nicht dargestellte Steuerung als Startermotor für die Brennkraftmaschine 12 oder als Generator zur Bereitstellung einer Versorgungsspannung für ein Bordnetz des Kraftfahrzeuges umschaltbar ist. Die elektrische Maschine 32 ist mit einem Zwischengetriebe 34 gekoppelt, das einerseits mit einer nicht dargestellten An- beziehungsweise Abtriebswelle der elektrischen Maschine 32 und andererseits mit der Schwungmasse 24 wirkverbunden ist. Das Zwischengetriebe 34 ist in zwei Übersetzungsstufen umschaltbar, wobei eine erste Übersetzungsstufe beispielsweise 1:2 und eine zweite Übersetzungsstufe 1:5 zwischen einer Eingangswelle und einer Ausgangswelle des Zwischengetriebes 34 beträgt.

Mittels der gezeigten Ausstattung des Antriebsaggregates 10 sind folgende Betriebszustände realisierbar:

Bei einem Direktstart der Brennkraftmaschine 12 wird die elektrische Maschine 32 als Startermotor geschaltet. Die Spannungsversorgung der elektrischen Maschine 32 erfolgt hierbei beispielsweise über eine Kraftfahrzeugbatterie. Die Kupplung 30 ist offen, das heißt, das Hauptgetriebe 18 ist von der Schwungmasse 24 getrennt. Gleichzeitig ist die Kupplung 28 geschlossen, so daß die Abtriebswelle 14 und somit die Kurbelwelle 16 mit der Schwungmasse 24 wirkverbunden sind. Hierdurch wird über das Zwischengetriebe 34 die Schwungmasse 24 in Rotation versetzt, die ihrerseits über die geschlossene Kupplung 28 die Abtriebswelle 14 beziehungsweise die Kurbelwelle 16 antreibt. Hierdurch wird die Brennkraftmaschine 12 mit einer bestimmten Drehzahl durchgedreht, bis diese in bekannter Weise startet. Das Zwischengetriebe 34 ist hierbei vorzugsweise mit der hohen Übersetzung von 1:5 geschaltet, so daß eine relativ hohe Drehzahl der als Startermotor geschalteten elektrischen Maschine 32 entsprechend untersetzt wird, und die Brennkraftmaschine 12 mit dieser niederen Drehzahl angedreht wird.

Die gezeigte Anordnung ist weiterhin für einen Impulsstart geeinget. Hierbei wird die elektrische Maschine 32 wiederum als Startermotor betrieben, während gleichzeitig die Kupplungen 28 und 30 geöffnet sind. Hierdurch wird die Schwungmasse 24 über die elektrische Maschine 32 hochgefahren, bis diese eine Solldrehzahl erreicht. Die Übersetzung des Zwischengetriebes 34 ist auf die hohe Übersetzung von beispielsweise 1:5 geschaltet. Nach Erreichen der Solldrehzahl der Schwungmasse 24 wird die Kupplung 28 geschlossen, so daß die in der Schwungmasse 24 gespeicherte kinetische Energie plötzlich, das heißt impulsartig, zum Andrehen der Brennkraftmaschine 12 ausgenutzt wird.

In den beiden genannten Fällen des Andrehens der Brennkraftmaschine 12 wird die elektrische Maschine 32 abgeschaltet, sobald die Abtriebswelle 14 der Brennkraftmaschine 12 und somit entsprechend die Kurbelwelle 16 ihre Solldrehzahl erreicht hat. Die elektrische Maschine 32 wird dann vom Motorbetrieb in den Generatorbetrieb umgeschaltet, so daß die über die geschlossene Kupplung 28 mitrotierende Schwungmasse 24 das Zwischengetriebe 34 kämmt, das dann die elektrische Maschine 32 entsprechend der gewählten Übersetzung antreibt. Die generierte Generatorspannung wird abgegriffen und der Bordnetzversorgung des Kraftfahrzeuges zur Verfügung gestellt. Die Übersetzung des Zwischengetriebes 34 schaltet hierbei bei einer Drehzahl n der Abtriebswelle 14 von >1500 U/min auf die kleinere Übersetzung 1:2 um, so daß die Generatordrehzahl der elektrischen Maschine 32 abgesenkt wird, diese jedoch für die Erzeugung der Bordspannung ausreichend ist.

Zum Antreiben des Kraftfahrzeuges wird bei angelassener Brennkraftmaschine 12 die Kupplung 30 geschlossen, so daß entsprechend der Schaltstellung des Hauptgetriebes 18 die Getriebeausgangswelle 22 in bekannter Weise die Antriebsräder des Kraftfahrzeuges antreibt. Soll nunmehr das Hauptgetriebe 18 in den nächsthöheren Gang geschaltet werden, wird bei einer angenommenen Drehzahl n der Abtriebswelle 14 von <1500 U/min zunächst die Kupplung 30 geöffnet, und das Zwischengetriebe 34 von der niederen Übersetzung in die höhere Übersetzung umgeschaltet. Hierdurch wird ein bremsender Drehmomentstoß auf die Abtriebswelle 14, über die Schwungmasse 24, ausgeübt, so daß die Drehzahl n der Abtriebswelle 14 bis auf eine notwendige Snchrondrehzahl für das Hauptgetriebe 18 abgesenkt wird. Nach Erreichen dieser Synchrondrehzahl wird die Kupplung 30 geschlossen, und das Hauptgetriebe 18 kann den nächsthöheren Gang schalten.

Soll das Hauptgetriebe 18 bei einer Drehzahl n der Abtriebswelle 14 von <1500 U/min in den nächsthöheren Gang geschaltet werden, wird ebenfalls zunächst die Kupplung 30 geöffnet, und die Drehzahl der Abtriebswelle 14 auf die Synchrondrehzahl über der in niederer Übersetzung des Zwischengetriebes 34 mitlaufenden elektrischen Maschine 32 abgesenkt, indem von dieser gleichzeitig eine hohe elektrische Last abverlangt wird. Entsprechend der höheren elektrischen Last muß eine höhere Eingangsenergie zur Verfügung gestellt werden, die der kinetischen Energie der Schwungmasse 24 entnommen wird, so daß diese bremsend auf die Abtriebswelle 14 wirkt. Nach Erreichen der Synchronisierungsdrehzahl der Abtriebswelle 14 kann das Hauptgetriebe 18 in den nächsthöheren Gang geschaltet und die Kupplung 30 geschlossen werden.

Eine weitere Betriebssituation ist gegeben, wenn das Hauptgetriebe 18 bei einer Drehzahl n der Abtriebswelle 14 von >1500 U/min in den nächsttieferen Gang geschaltet werden soll. Hierzu wird zunächst die Kupplung 28 geöffnet und die elektrische Maschine 32 in Motorbetrieb umgeschaltet. Das Zwischengetriebe 34 ist bei Drehzahlen von n > 1500 U/min in der niederen Übersetzung geschaltet, so daß eine Synchronisationsdrehzahl der Getriebeeingangswelle 20 über den Motorbetrieb der elektrischen Maschine 32 einstellbar ist. Ist diese Synchronisationsdrehzahl erreicht, wird das Hauptgetriebe 18 in den nächsttieferen Gang geschaltet und die Kupplung 28 geschlossen.

Soll das Hauptgetriebe 18 bei einer Drehzahl der Abtriebswelle 14 von n < 1500 U/min in den nächsttieferen Gang geschaltet werden, öffnet zunächst wiederum die Kupplung 28. Anschließend wird das Zwischengetriebe von der höheren Übersetzung von beispielsweise 1:5 bei Drehzahlen n < 1500 U/min in die niedere Übersetzung, beispielsweise 1:2, umgeschaltet, so daß entsprechend des Übersetzungsverhältnisses die Drehzahl der Getriebeeingangswelle 20 angehoben wird. Das Anheben der Drehzahl auf die Synchronisationsdrehzahl erfolgt hierbei über einen Drehmomentstoß, der infolge der plötzlichen Umschaltung des wischengetriebes 34 von der höheren Übersetzung auf die niedere Übersetzung erzeugt wird.

Schließlich ist es noch möglich, die Übersetzung des Zwischengetriebes 34 unabhängig von der momentanen Drehzahl n der Getriebeeingangswelle 20 auf die niedere Übersetzung , beispielsweise 1:2 umzuschalten, so daß eine Massenträgheit der rotierenden Teile des Zwischengetriebes 34 und der elektrischen Maschine 32, bezogen auf die Kurbelwelle 16 beziehungsweise die Abtriebswelle 14, wirksam reduziert ist. Hierdurch wird eine bestmögliche Beschleunigung des Kraftfahrzeuges erreicht.

Die Figur 2 zeigt eine zweite Variante eines Antriebsaggregates 10 eines Kraftfahrzeuges in einer schematischen Prinzipskizze. Das Antriebsaggregat 10 umfaßt eine Brennkraftmaschine 12, dessen Abtriebswelle 14 über eine von im einzelnen nicht dargestellten Zylindern gekoppelte Kurbelwelle 16 drehfest verbunden ist. Das Antriebsaggregat 10 umfaßt weiterhin ein Hauptgetriebe 18, das eine Getriebeeingangswelle 20 und eine Getriebeausgangswelle 22 umfaßt. Die Getriebeausgangswelle 22 ist mit nicht dargestellten Antriebsrädern des Kraftfahrzeuges wirkverbunden. Zwischen der Brennkraftmaschine 12 und dem Hauptgetriebe 18 ist eine Schwungmasse angeordnet, die beispielsweise von einem Zwei-Massen-Schwungrad 27 gebildet ist. Eine Drehachse der Schwungmasse 27 fällt hierbei mit einer Drehachse der Antriebswelle 14 sowie der Getriebeeingangswelle 20 zusammen. Die Brennkraftmaschine 12 ist über seine Abtriebswelle fest mit dem Zwei-Massen-Schwungrad 27 verbunden. Zwischen diesem Schwungrad 27 und der Getriebeeingangswelle 20 ist eine Kupplung 31 angeordnet. Das Antriebsaggregat 10 umfaßt ferner eine elektrische Maschine 32, die über eine im einzelnen nicht dargestellte Steuerung als Startermotor für die Brennkraftmaschine 12 oder als Generator zur Bereitstellung einer Versorgungsspannung für ein Bordnetz des Kraftfahrzeuges umschaltbar ist. Die elektrische Maschine 32 ist mit einem Zwischengetriebe 34 gekoppelt, das einerseits mit einer nicht dargestellten An- beziehungsweise Abtriebswelle der elektrischen Maschine 32 und andererseits mit der Getriebeeingangswelle 20 wirkverbunden ist. Das Zwischengetriebe 34 ist in zwei Übersetzungsstufen umschaltbar, wobei eine erste Übersetzungsstufe beispielsweise 1:2 und eine zweite Übersetzungsstufe 1:5 zwischen einer Eingangswelle und einer Ausgangswelle des Zwischengetriebes 34 beträgt. Die Umschaltung zwischen diesen beiden Übersetzungsstufen erfolgt über zwei unabhängig ansteuerbare, hier nicht näher dargestellte, Kupplungen im Zwischengetriebe 34. Dadurch ist neben der Übersetzungsumschaltung auch eine Trennung der Wirkverbindung zwischen elektrischer Maschine 32 und der Getriebeeingangswelle 20 möglich.

Mittels der gezeigten Ausstattung des Antriebsaggregates 10 sind folgende Betriebszustände realisierbar:

Bei einem Direktstart der Brennkraftmaschine 12 wird die elektrische Maschine 32 als Startermotor geschaltet. Die Spannungsversorgung der elektrischen Maschine 32 erfolgt hierbei beispielsweise über eine Kraftfahrzeugbatterie. Das Hauptgetriebe 18 befindet sich in Neutralstellung, wodurch die Wirkverbindung zwischen der Getriebeeingangswelle 20 und der Getriebeausgangswelle 22 unterbrochen ist. Die Kupplung 31 ist geschlossen, das heißt die Antriebswelle 14 und somit die Kurbelwelle 16 der Brennkraftmaschine 12 ist mit der Getriebeeingangswelle 20 wirkverbunden. Das von der elektrischen Maschine 32 angetriebene Zwischengetriebe 34, das mit der Getriebeeingangswelle 20 wirkverbunden ist, setzt über die geschlossene Kupplung 31 die Abtriebswelle 14 beziehungsweise die Kurbelwelle 16 in Rotation. Hierdurch wird die Brennkraftmaschine 12 mit einer bestimmten Drehzahl durchgedreht, bis diese in bekannter Weise startet. Das Zwischengetriebe 34 ist hierbei vorzugsweise in der hohen Übersetzung von 1:5 geschaltet, so daß eine relativ hohe Drehzahl der als Startermotor geschalteten elektrischen Maschine 32 entsprechend untersetzt wird, und die Brennkraftmaschine 12 mit dieser niederen Drehzahl angedreht wird.

Die in Figur 2 gezeigte Anordnung ist weiterhin für einen sogenannten Impulsstart geeignet. Hierbei wird die elektrische Maschine 32 wiederum als Startermotor betrieben, während gleichzeitig die Kupplung 31 zunächst geöffnet ist. Das Hauptgetriebe 18 befindet sich wiederum in der Neutralstellung, wodurch die Wirkverbindung zwischen der Getriebeeingangswelle 20 und der Getriebeausgangswelle 22 und damit der Antrieb auf die Kraftfahrzeugräder unterbrochen ist. Durch den Betrieb der elektrischen Maschine 32 wird die Getriebeeingangswelle 20 mit einer Mitnehmerscheibe der Kupplung 31 beschleunigt, bis diese eine Solldrehzahl erreicht. Die Übersetzung des Zwischengetriebes 34 ist auf die hohe Übersetzung von beispielsweise 1:5 geschaltet. Nachdem die Solldrehzahl der Getriebeeingangswelle 20 erreicht ist, wird die Kupplung 31 geschlossen, so daß die im Rotor der elektrischen Maschine 32 und in den drehenden Teilen des Hauptgetriebes 18 und der Kupplung 31 gespeicherte Rotationsenergie plötzlich, das heißt impulsartig, zum Andrehen der Brennkraftmaschine ausgenutzt werden kann. Die elektrische Maschine 32 liefert darüber hinaus solange ein Drehmoment, bis die Brennkraftmaschine 12 angelaufen ist.

In diesen beiden beschriebenen Anlaßfällen der Brennkraftmaschine 12 wird die elektrische Maschine 32 abgeschaltet, sobald die Abtriebswelle 14 der Brennkraftmaschine 12 und somit dessen Kurbelwelle 16 ihre Solldrehzahl erreicht hat. Die elektrische Maschine 32 wird dann vom Starterbetrieb in den Generatorbetrieb umgeschaltet, so daß die über die geschlossene Kupplung 31 angetriebene Getriebeeingangswelle das Zwischengetriebe 34 antreibt, das dann wiederum die elektrische Maschine 32 entsprechend der gewählten Übersetzung antreibt. Die erzeugte Generatorspannung wird abgegriffen und der Bordnetzversorgung des Kraftfahrzeuges zur Verfügung gestellt. Die Übersetzung des Zwischengetriebes 34 schaltet hierbei bei einer Drehzahl der Abtriebswelle 14 von n > 1500 U/min auf die kleinere Übersetzung um, so daß die Generatordrehzahl der elektrischen Maschine 32 zur Erreichung eines günstigeren Generatorwirkungsgrades abgesenkt wird, diese jedoch für die Erzeugung der Bordspannung ausreichend bleibt.

Zum Antreiben des Kraftfahrzeuges wird bei laufender Brennkraftmaschine 12 die Kupplung 31 geschlossen, so daß entsprechend der vorgewählten Schaltstellung des Hauptgetriebes 18 die Getriebeausgangswelle 22 in bekannter Weise die Antriebsräder des Kraftfahrzeuges antreibt. Soll nunmehr das Hauptgetriebe 18 in den nächsthöheren Gang geschaltet werden, wird bei einer angenommenen Drehzahl der Abtriebswelle 14 von n < 1500 U/min zunächst die Kupplung 31 geöffnet, das Hauptgetriebe 18 in die Neutralstellung gebracht und dann das Zwischengetriebe 34 von der niederen Übersetzung in die höhere Übersetzung umgeschaltet. Hierdurch wird ein bremsender Drehmomentstoß auf die Getriebeeingangswelle 20 ausgeübt, so daß die Drehzahl n der Getriebeeingangswelle 20 bis auf eine notwendige Synchrondrehzahl für das Hauptgetriebe 18 abgesenkt wird. Nach dem Erreichen dieser Synchrondrehzahl kann das Hauptgetriebe in den nächsthöheren Gang geschaltet werden und durch Schließen der Kupplung 31 die kraftschlüssige Verbindung zur Brennkraftmaschine 12 wiederhergestellt werden.

Soll das Hauptgetriebe 18 bei einer Drehzahl der Abtriebswelle 14 von n < 1500 U/min in den nächsthöheren Gang geschaltet werden, wird ebenfalls zunächst die Kupplung 31 geöffnet und das Hauptgetriebe 18 in die Neutralstellung gebracht. Die Drehzahl der Getriebeeingangswelle 20 wird über die in niederer Übersetzung des Zwischengetriebes 34 mitlaufende elektrische Maschine 32 auf die Synchrondrehzahl abgesenkt, indem von der elektrischen Maschine 32 eine hohe elektrische Last abverlangt wird. Nach Erreichen der Synchronisierungsdrehzahl der Getriebeeingangswelle 20 kann das Hauptgetriebe 18 in den nächsthöheren Gang geschaltet und die Kupplung 31 geschlossen werden.

Eine alternative Möglichkeit, bei einer Drehzahl der Abtriebswelle 14 von n < 1500 U/min das Hauptgetriebe 18 in den nächsthöheren Gang umzuschalten, ist, zunächst die elektrische Maschine 32 durch Umschalten des Zwischengetriebes 34 auf die kleinere Übersetzung abzubremsen. Dies erfolgt durch geeignete Betätigung der hier nicht näher dargestellten Kupplungen im Zwischengetriebe 34. Danach wird die Kupplung 31 geöffnet und das Zwischengetriebe 34 wieder auf die höhere Übersetzung geschaltet. Dadurch wird die Drehzahl der Getriebeeingangswelle 20 abgesenkt. Nach Erreichen der Synchronisierungsdrehzahl der Getriebeeingangswelle 20 kann das Hauptgetriebe 18 in den nächsthöheren Gang geschaltet und die Kupplung 31 geschlossen werden.

Eine weitere Betriebssituation ist gegeben, wenn das Hauptgetriebe 18 bei einer Drehzahl der Abtriebswelle 14 von n > 1500 U/min in den nächsttieferen Gang geschaltet werden soll. Hierzu wird zunächst die Kupplung 31 geöffnet, das Hauptgetriebe 18 in die Neutralstellung gebracht und die elektrische Maschine 32 in den Motorbetrieb umgeschaltet. Mit der elektrischen Maschine 32 wird die Drehzahl der Getriebeingangswelle 20 auf die passende Synchronisierungsdrehzahl angehoben. Das Zwischengetriebe 34 ist bei Drehzahlen von n > 1500 U/min in der niederen Übersetzung geschaltet, so daß eine passende Synchronisierungsdrehzahl der Getriebeeingangswelle 20 über den Motorbetrieb der elektrischen Maschine 32 einstellbar ist. Ist diese Synchronisierungsdrehzahl erreicht, wird das Hauptgetriebe 18 in den nächsttieferen Gang geschaltet und die Kupplung 31 geschlossen.

Soll das Hauptgetriebe 18 bei einer Drehzahl der Abtriebswelle 14 von n < 1500 U/min in den nächsttieferen Gang geschaltet werden, öffnet zunächst wiederum die Kupplung 31 und das Hauptgetriebe 18 wird in Neutralstellung geschaltet. Anschließend wird das Zwischengetriebe 34 von der höheren Übersetzung von beispielsweise 1:5 bei Drehzahlen n < 1500 in die niedere Übersetzung, beispielsweise 1:2, umgeschaltet, so daß entsprechend des Übersetzungsverhältnisses die Drehzahl der Getriebeeingangswelle 20 angehoben wird. Das Anheben der Drehzahl auf die Synchronisierungsdrehzahl erfolgt hierbei über einen Drehmomentstoß, der infolge der plötzlichen Umschaltung des Zwischengetriebes 34 von der höheren Übersetzung auf die niedere Übersetzung erzeugt wird. Das Hauptgetriebe 18 kann dann in den nächsttieferen Gang geschaltet und die Kupplung 31 geschlossen werden.

Soll dem Kraftfahrzeug eine maximale Beschleunigung abverlangt werden, ist es schließlich noch möglich, die Übersetzung des Zwischengetriebes 34 unabhängig von der momentanen Drehzahl n der Abtriebswelle 14 auf die niedere Übersetzung, beispielsweise 1:2, umzuschalten, wodurch eine auf die Kurbelwelle 16 beziehungsweise die Abtriebswelle 14 bezogene wirksame Massenträgheit der rotierenden Teile des Zwischengetriebes 34 reduziert ist. Eine weitere effektive Reduzierung der wirksamen Massenträgheit kann durch Einstellung einer Neutralstellung im Zwischengetriebe 34 erreicht werden.

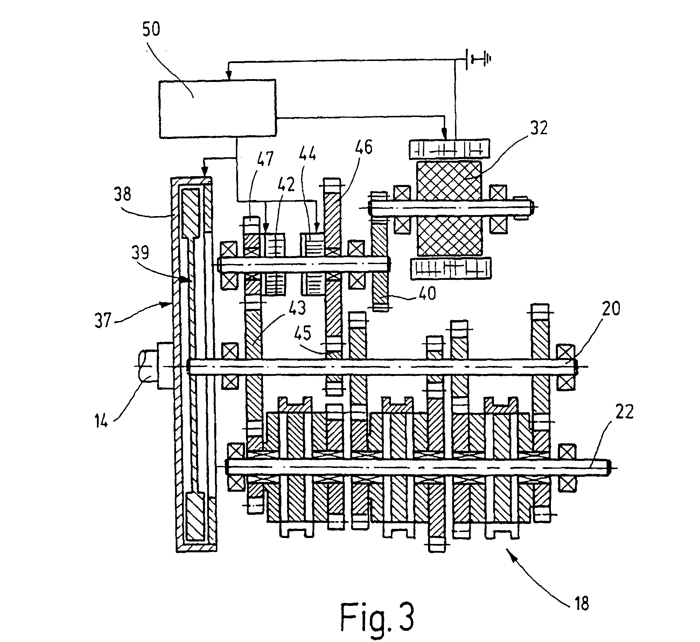

Die Figur 3 zeigt eine detailliertere Schnittdarstellung einer leicht gegenüber der Variante entsprechend Figur 1 modifizierten Ausführung. Hier sind die einzelnen Bauteile und Ihre Einbaulage zueinander gut erkennbar. Die Abtriebswelle 14 des Motors ist mit einer herkömmlichen Kupplung 37, bestehend aus Schwungrad 38 und Mitnehmerscheibe 39, mit einer Getriebeeingangswelle 20 verbunden. Auf dieser Getriebeeingangswelle sind zwei Zahnräder, 43 und 45 drehfest angebracht, die mit zwei entsprechenden Zahnrädern, 46 und 47, auf einer Zwischenwelle 40 im Eingriff stehen. Diese Zwischenwelle 40 steht über ein weiteres Zahnradpaar mit der elektrischen Maschine 32 in Wirkverbindung. Die Getriebeausgangswelle 22 ist mit nicht dargestellten Antriebsrädern des Kraftfahrzeuges wirkverbunden. Die auf der Zwischenwelle 40 befindlichen Zahnräder 46 und 47 sind jeweils mit Kupplungen 42 und 44 verbunden, die erst für eine drehfeste Verbindung entweder des Zahnrades 46 oder des Zahnrades 47 mit der Zwischenwelle 40 sorgen. Die Betätigung dieser beiden Kupplungen 42 und 44 wird von einem elektronischen Steuergerät 50 überwacht, das je nach Betriebs- und Fahrzustand des Kraftfahrzeuges für einen passenden Betrieb der elektrischen Maschine 32 sorgt.

Zum Direktstart der hier nicht dargestellten Brennkraftmaschine wird das Getriebe 18 in Neutralstellung gebracht, wobei die Hauptkupplung 37 geöffnet ist. Das Getriebe 18 ist somit von der Brennkraftmaschine beziehungsweise dessen Motorwelle 14 getrennt. Die elektrische Maschine 32 wird als Startermotor geschaltet. Die dazu erforderliche Spannungsversorgung der elektrischen Maschine 32 erfolgt beispielsweise aus einer Kraftfahrzeugbatterie. Zunächst wird nun die Kupplung 42 geschlossen, wodurch die Getriebeeingangswelle 20 mit einer bestimmten Drehzahl gedreht wird. Die Drehzahl wird dabei bestimmt über das Übersetzungsverhältnis des Zahnradpaares 47, 43 und kann beispielsweise 1:5 oder 1:6 betragen. Die daraus erzeugte kinetische Energie wird in alle rotierenden Teile des Getriebes 18 gespeichert, außer in der Getriebeausgangswelle 22, da sich das Getriebe 18 in der Neutralstellung befindet. Wird nun die Hauptkupplung 37 des Kraftfahrzeuges geschlossen, wird mit der im Getriebe und im Rotor der elektrischen Maschine 32 gespeicherten Rotationsenergie die Brennkraftmaschine durchgedreht, wodurch gleichzeitig die Drehzahl der Getriebeeingangswelle 20 absinkt. Nach Erreichen einer bestimmten Drehzahl dieser Getriebeeingangswelle 20 wird wird von der elektrischen Maschine 32 die Brennkraftmaschine durchgedreht, bis diese startet. Die Momentenschwankungen der Brennkraftmaschine durch das Verdichten der einzelnen Zylinder werden von einem Torsionsschwingungsdämpfer in der Hauptkupplung 37 des Kraftfahrzeuges gedämpft und weitgehend unterdrückt. Die Trägheitsmomente der rotierenden Getriebewellen gleichen zusätzlich Drehzahlschwankungen aus. Aus diesem Grund genügt eine Gesamtübersetzung von 1:5 oder 1:6 für die elektrische Maschine 32 beim Anlassen. Nach Erreichen einer Mindestdrehzahl wird die elektrische Maschine 32 vom Starter- in den Generatorbetrieb umgeschaltet.

Im generatorischen Betrieb während der Fahrt kann die Drehzahl der elektrischen Maschine 32 mit Hilfe der beiden Kupplungen 42 und 44 je nach der Motordrehzahl passend übersetzt werden. Beispielsweise kann bei einer Drehzahl von n = 1500 U/min die Übersetzung umgeschaltet werden.

Die weiteren Funktionen wie die Getriebesynchronisation sind bereits weiter oben beschrieben worden und sollen daher an dieser Stelle nicht noch einmal wiederholt werden.

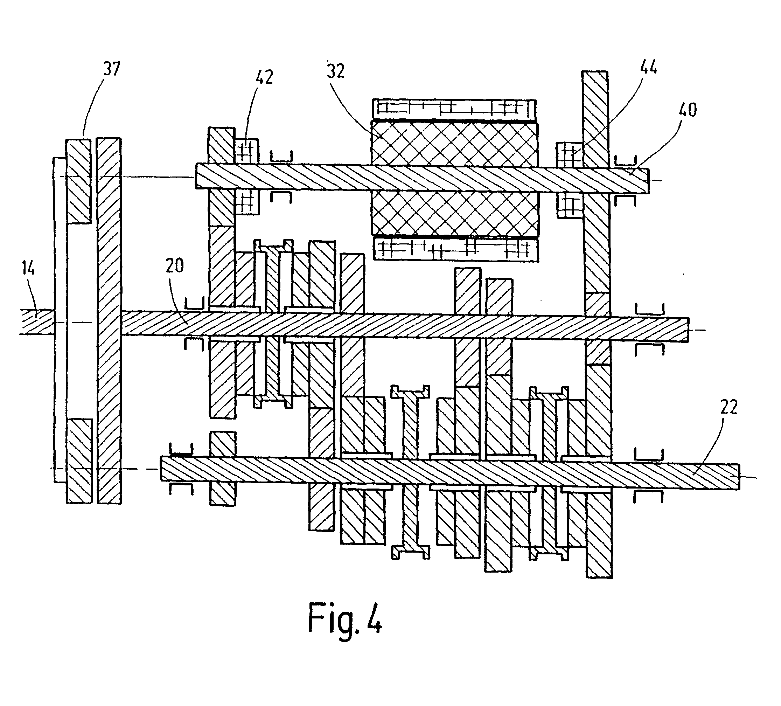

Die Figur 4 zeigt in einem weiteren Ausführungsbeispiel ein Kraftfahrzeuggetriebe mit integrierter elektrischer Maschine 32, deren Rotor- beziehungsweise Zwischenwelle 40 beidseitig über je eine Kupplung 42 und 44 mit je einem Zahnrad des Getriebes kuppelbar ist. Die elektrische Maschine 32 und das Getriebe lassen sich dabei in der gleichen Weise betreiben und steuern, wie dies in dem Ausführungsbeispiel nach Figur 3 beschrieben ist.

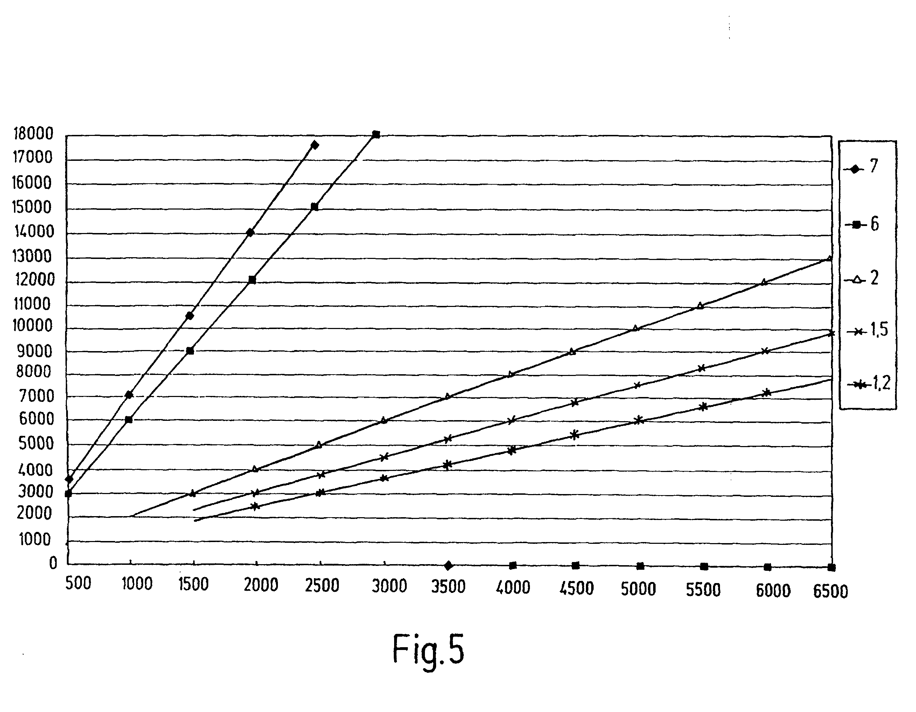

In Figur 5 ist ein beispielhaftes Diagramm dargestellt, das die Drehzahlen der elektrischen Maschine 32 den Drehzahlen der Brennkraftmaschine 12 beziehungsweise dessen Kurbelwelle 16 bei verschiedenen Übersetzungen des Zwischengetriebes 34 gegenüberstellt. Auf der Abszisse des zweidimensionalen Diagrammes ist hierbei die Motordrehzahl in Umdrehungen je Minute (U/min) aufgetragen. Die Ordinate zeigt die Drehzahl in U/min der elektrischen Maschine 32. Im Diagramm sind beispielhaft fünf verschiedene Geraden eingezeichnet und zwar die relativ flache Gerade für eine Übersetzungen des Zwischengetriebes 34 von 1:1,2. Die Übersetzungen 1:1,5 und 1:2 zeigen geringfügig steilere Geraden. Weiter links sind zwei relativ steile Geraden eingezeichnet, und zwar für die beispielhaften Übersetzungsverhältnisse 1:6 und 1:7 des Zwischengetriebes 34. Diese höheren Übersetzungsverhältnisse sind für den Starterbetrieb der elektrischen Maschine 32 beziehungsweise für niedere Motordrehzahlen im Generatorbetrieb sinnvoll, um den Generator in einem günstigen Wirkungsgradbereich betreiben zu können. Bei höheren Motordrehzahlen sind hingegen die niederen Übersetzungen von 1:2 oder noch kleiner sinnvoll, um die elektrische Maschine wiederum in einem Bereich günstigen Wirkungsgrades betreiben zu können.

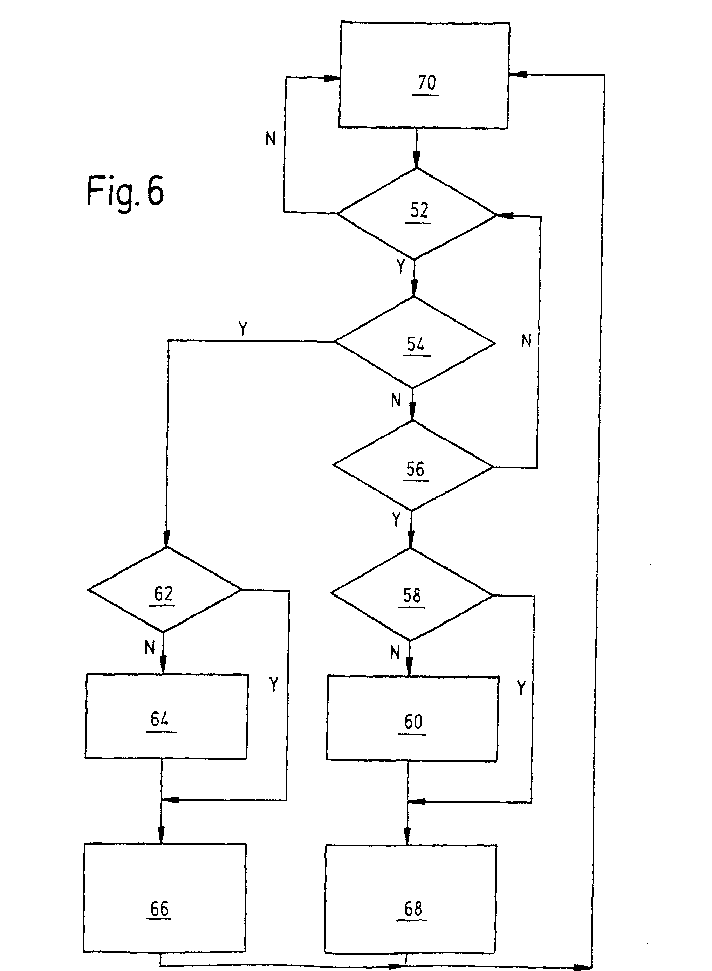

Figur 6 zeigt ein Ablaufdiagramm einer Steuerung zur Getriebesynchronisation zur besseren Anschaulichkeit der Vorgänge bei einem Schaltvorgang des Hauptgetriebes 18. Diese Steuerung kann beispielsweise eine Programmierung eines elektronischen Steuergerätes 50 sein, das die gesamten Komponenten des Getriebes, wie Kupplungen 28, 30, 31, 37, 42, 44 oder der elektrischen Maschine 32 in Abhängigkeit von den verschiedenen Betriebszuständen des Fahrzeuges oder der Parameter der Brennkraftmaschine, steuert. Die Pfeile in dem Ablaufdiagramm sind mit Y für Ja, das heißt ein positives Abfrageergebnis, und mit N für Nein, das heißt ein negatives Abfrageergebnis, bezeichnet.

Soll das Hauptgetriebe 18 in eine neue Übersetzungsstufe geschaltet werden, wird ein Kontakt am Schalthebel betätigt. Abgefragt wird die Betätigung dieses Kontaktes in dem Schritt 52. Ist das Abfrageergebnis positiv (Y), wird im nächsten Schritt 54 abgefragt, ob die Schaltrichtung nach oben geht, das heißt ob das Getriebe in den nächsthöheren Gang geschaltet werden soll. Ist dieses Abfrageergebnis negativ (N), so wird im Schritt 56 abgefragt, ob die Schaltrichtung nach unten geht, das heißt ob das Getriebe in den nächstniederen Gang geschaltet werden soll. Ist dieses Abfrageergebnis negativ (N), so springt das Programm zurück zum Schritt 52, bei dem der Status des Schalthebelkontaktes abgefragt wird. Ist das Abfrageergebnis im Schritt 54 positiv (Y), so fährt das Programm weiter mit Schritt 62, bei dem abgefragt wird, ob die Getriebeübersetzung des Zwischengetriebes 34 auf eine Übersetzung von 1:2 eingestellt ist. Ist dieses Abfrageergebnis negativ (N), so wird im Schritt 64 das Zwischengetriebe 34 auf eine Übersetzung von 1:2 umgeschaltet. Danach fährt das Programm fort mit dem Schritt 66, bei dem eine Synchronisation des Hauptgetriebes 18 durch eine Umschaltung der Übersetzung des Zwischengetriebes von 1:2 auf 1:5 erfolgt. Ist das Abfrageergebnis im Schritt 62 positiv (Y), springt das Programm gleich zum Schritt 66. Durch die Erhöhung des wirksamen Massenträgheitsmomentes der elektrischen Maschine 32 erfolgt die Getriebesynchronisation. Der Pfeil zum Schritt 70 verdeutlicht die Gesamtfunktion der Getriebesteuerung, nämlich die Übersetzungsänderung des Zwischengetriebes 34 als Funktion der Drehzahl. Ist das Abfrageergebnis im Schritt 56 positiv (Y), so fährt das Programm weiter mit Schritt 58, bei dem abgefragt wird, ob die Getriebeübersetzung des Zwischengetriebes 34 auf eine Übersetzung von 1:5 eingestellt ist. Ist dieses Abfrageergebnis negativ (N), so wird im Schritt 60 das Zwischengetriebe 34 auf eine Übersetzung von 1:5 umgeschaltet. Danach fährt das Programm fort mit dem Schritt 68, bei dem eine Synchronisation des Hauptgetriebes 18 durch eine Umschaltung der Übersetzung des Zwischengetriebes von 1:5 auf 1:2 erfolgt. Ist das Abfrageergebnis im Schritt 58 positiv (Y), springt das Programm gleich zum Schritt 68. Vom Schritt 68 führt ebenfalls ein Pfeil zum Schritt 70 und von diesem wiederum zum Schritt 52. Hier wird permanent, das heißt in kurzen Zeitabständen, der Status des Schalthebelkontaktes abgefragt. Ist das Abfrageergebnis im Schritt 52 negativ (N), was bedeutet, daß seit der letzten Abfrage der Schalthebel nicht betätigt wurde, fährt das Programm fort mit Schritt 70, wodurch eine permanente Abfragesituation erfolgt.

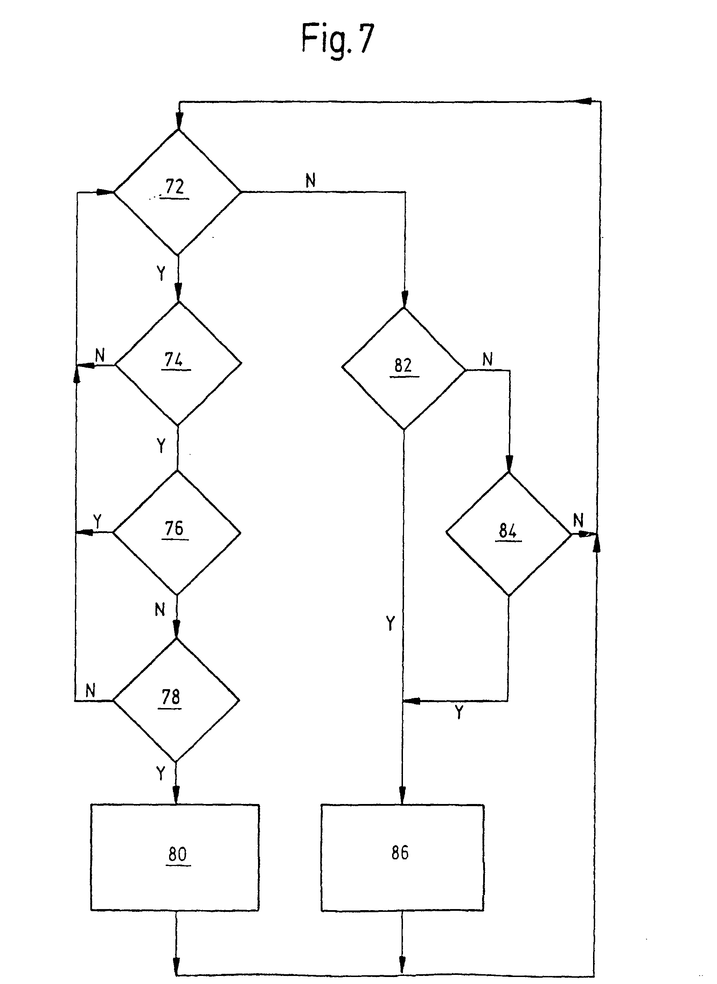

Figur 7 zeigt schließlich ein beispielhaftes Ablaufdiagramm einer Getriebesteuerung im Generatorbetrieb der elektrischen Maschine 32. Ausgehend beispielsweise von einer Abfrage der Übersetzung des Zwischengetriebes 34 im Programmschritt 72, wird je nach Abfrageergebnis die Motordrehzahl abgefragt. Ist das Abfrageergebnis im Schritt 72 positiv (Y), so fährt das Programm fort mit Schritt 74, in dem abgefragt wird, ob die Drehzahl der Brennkraftmaschine 12 kleiner als 1500 U/min beträgt. Ist dieses Abfrageergebnis positiv (Y), wird im Schritt 76 abgefragt, ob das Fahrzeug beschleunigt werden soll. Ist dieses Abfrageergebnis im Schritt 76 negativ (N), so wird im nächsten Schritt 78 abgefragt, ob ein zusätzlicher Leistungsbedarf im elektrischen Bordnetz des Fahrzeugs besteht. Ist dieses Abfrageergebnis positiv (Y), so wird im Programmschritt 80 die Übersetzung des Zwischengetriebes 34 auf 1:5 umgeschaltet. Ist das Abfrageergebnis im Schritt 74 negativ (N), so springt das Programm zurück zum Schritt 72, in dem abgefragt wird, ob das Zwischengetriebes 34 auf eine Übersetzung von 1:2 eingestellt ist. Ebenso führt eine positives Abfrageergebnis (Y) im Schritt 76 oder ein negatives Abfrageergebnis (N) im Schritt 78 jeweils zu einem Sprung zum Schritt 72. Vom Schritt 80 führt ebenfalls ein Pfeil zurück zum Schritt 72, was die permanente Abfrage der im Zwischengetriebe 34 eingestellten Übersetzungsstufe verdeutlicht. Ist das Abfrageergebnis im Schritt 72 negativ (N), so geht das Programm weiter zum Schritt 82, bei dem abgefragt wird, ob die Drehzahl der Brennkraftmaschine 12 über einem Wert von 1800 U/min liegt. Ist dieses Abfrageergebnis positiv (Y), das heißt die Brennkraftmaschine läuft mit höherer Drehzahl als 1800 U/min, so fährt das Programm fort mit Schritt 86, bei dem das Zwischengetriebe 34 auf eine Übersetzung von 1:2 umgeschaltet wird. Ist das Abfrageergebnis im Schritt 82 negativ (N), so fährt das Prgramm fort mit Schritt 84. Hier wird abgefragt, ob das Fahrzeug eine große Beschleunigung erfahren soll. Ist dieses Abfrageergebnis negativ (N), so springt das Programm zum Schritt 72. Ist hingegen das Abfrageergebnis im Schritt 84 positiv (Y), so fährt das Programm fort mit Schritt 86. Von hier geht das Programm ebenfalls weiter zum Schritt 72, wo wiederum die aktuelle Übersetzung des Zwischengetriebes 34 abgefragt wird.

## Patentansprüche

1. Antriebsaggregat für Kraftfahrzeuge mit einer Brennkraftmaschine und einem auf die Antriebsräder des Kraftfahrzeuges wirkenden Getriebe, wobei eine Getriebeeingangswelle mit einer Abtriebswelle der Brennkraftmaschine kuppelbar ist, und einer elektrischen Maschine, die über ein Zwischengetriebe mit dem Getriebe kuppelbar ist und die als Startermotor zum Andrehen der Brennkraftmaschine und als Generator zur Versorgung eines Bordnetzes des Kraftfahrzeuges umschaltbar ist, wobei die Abtriebswelle (14) der Brennkraftmaschine (12) und die Getriebeeingangswelle (20) des Hauptgetriebes (18) sowie die elektrische Maschine (32) auf das Zwischengetriebe (34) mit Hilfe mindestens einer steuerbaren Kupplung (28,30,31,37,42,44) miteinander kuppelbar sind, **dadurch gekennzeichnet, daß** die Abtriebswelle (14) der Brennkraftmaschine (12) und die Getriebeeingangswelle (20) des Hauptgetriebes (18) über jeweils eine Kupplung (28,30) mit einer Schwungmasse (24) kuppelbar sind, die eine für einen Impulsstart der Brennkraftmaschine ausreichende kinetische Energie aufzunehmen vermag, und daß die Schwungmasse (24) mit dem Zwischengetriebe (34) in Wirkeingriff steht.

2. Antriebsaggregat nach Anspruch 1, **dadurch gekennzeichnet, daß** die Abtriebswelle (14) der Brennkraftmaschine (12) und die Getriebeeingangswelle (20) des Hauptgetriebes (18) über eine Kupplung (31) und ein Schwungrad (27) miteinander kuppelbar sind, wobei die elektrische Maschine (32) über ein schaltbares Zwischengetriebe (34) permanent mit der Getriebeeingangswelle (20) im Wirkeingriff steht.

3. Antriebsaggregat nach Anspruch 2, **dadurch gekennzeichnet, daß** das schaltbare Zwischengetriebe (34) mindestens zwei Übersetzungsstufen und eine Neutralstellung aufweist.

4. Antriebsaggregat nach Anspruch 1, **dadurch gekennzeichnet, daß** die elektrische Maschine (32) mit einer Zwischenwelle (40) in Wirkeingriff steht, die über zwei steuerbare Kupplungen (42,44) mit jeweils unterschiedlicher Übersetzung mit der Getriebeeingangswelle (20) in Wirkeingriff zu bringen ist.

5. Antriebsaggregat nach Anspruch 4, **dadurch gekennzeichnet, daß** ein elektronisches Steuergerät (50) aus den Informationen über die Motordrehzahl, den Raddrehzahlen und den gewünschten Getriebezuständen die beiden auf der Zwischenwelle (40) befindlichen Kupplungen (42,44) sowie die elektrische Maschine (32) steuert.

6. Antriebsaggregat nach Anspruch 1, **dadurch gekennzeichnet, daß** das elektronische Steuergerät (50) aus den Informationen über die Motordrehzahl, den Raddrehzahlen und den gewünschten Getriebezuständen die beiden Kupplungen (28,30) sowie die elektrische Maschine (32) steuert.

7. Antriebsaggregat nach Anspruch 2, **dadurch gekennzeichnet, daß** ein elektronisches Steuergerät (50) aus den Informationen über die Motordrehzahl, den Raddrehzahlen und den gewünschten Getriebezuständen die Kupplung (31) sowie'die elektrische Maschine (32) steuert.

8. Antriebsaggregat nach Anspruch 1, **dadurch gekennzeichnet, daß** die elektrische Maschine (32) derart über mindestens eine steuerbare Kupplung an der Getriebeeingangswelle (20) ankuppelbar ist, daß sie zum Synchronisieren des Hauptgetriebes (18) bei einer Gangrückschaltung als Elektromotor jeweils das langsamer laufende Zahnrad des zu kuppelnden Zahnradpaares beschleunigt oder bei einer Ganghochschaltung als Generator jeweils das schneller laufende Zahnrad abbremst.

9. Antriebsaggregat nach einem der vorhergehenden Ansprüche, **dadurch gekennzeichnet, daß** die elektrische Maschine (32) derart über ein Zwischengetriebe (34) an die Getriebeeingangswelle (20) ankuppelbar ist, daß zum Synchronisieren des Hauptgetriebes (18) die Übersetzungsstufen des Zwischengetriebes (34) und damit das Massenträgheitsmoment der elektrischen Maschine (32) entsprechend der gewünschten Drehzahlanpassung der Getriebeeingangswelle (20) wählbar sind.

10. Antriebsaggregat nach einem der vorhergehenden Ansprüche, **dadurch gekennzeichnet, daß** die Flüssigkeitskühlung der elektrischen Maschine (32) durch einen Anschluß an den Wasserkühlkreislauf der Brennkraftmaschine (12) sichergestellt wird.

11. Antriebsaggregat nach einem der vorhergehenden Ansprüche, **dadurch gekennzeichnet, daß** die elektrische Maschine (32) mittels angebautem oder extern angebrachtem Kühlgebläse luftgekühlt wird.

12. Antriebsaggregat nach einem der vorhergehenden Ansprüche, **dadurch gekennzeichnet, daß** die Schmierung der elektrischen Maschine (32) mittels Ölschmierung durch das Getriebeöl des Hauptgetriebes (18) erfolgt.

## Claims

1. Drive assembly for motor vehicles, having an internal combustion engine and a gear mechanism acting on the driven wheels of the motor vehicle, a gear-mechanism input shaft being connectable to an output shaft of the internal combustion engine, and having an electrical machine which can be connected to the gear mechanism via an intermediate gear mechanism and which can be switched over between being a starter motor for turning on the internal combustion engine and being a generator for supplying the motor-vehicle electrical system, wherein in that the output shaft (14) of the internal combustion engine (12) and the gear-mechanism input shaft (20) of the main gear mechanism (18) and also the electrical machine (32), via the intermediate gear mechanism (34), can be connected to one another with the aid of at least one controllable clutch (28, 30, 31, 37, 42, 44), **characterized in that** the output shaft (14) of the internal combustion engine (12) and the gear-mechanism input shaft (20) of the main gear mechanism (18) can be connected, via a respective clutch (28, 30), to a flywheel mass (24), which enables a kinetic energy sufficient for a pulse start of the internal combustion engine to be received, and **in that** the flywheel mass (24) is in operative engagement with the intermediate gear mechanism (34).

2. Drive assembly according to Claim 1, **characterized in that** the output shaft (14) of the internal combustion engine (12) and the gear-mechanism input shaft (20) of the main gear mechanism (18) can be connected to one another via a clutch (31) and a flywheel (27), the electrical machine (32) being continuously in operative engagement with the gear-mechanism input shaft (20) via a changeable-speed intermediate gear mechanism (34).

3. Drive assembly according to Claim 2, **characterized in that** the changeable-speed intermediate gear mechanism (34) has at least two transmission speeds and a neutral position.

4. Drive assembly according to Claim 1, **characterized in that** the electrical machine (32) is in operative engagement with an intermediate shaft (40) which can be brought into operative engagement with the gear-mechanism input shaft (20) via two controllable clutches (42, 44) which each have a different transmission ratio.

5. Drive assembly according to Claim 4, **characterized in that** an electronic control unit (50) uses the information on the speed of rotation of the engine, the speeds of rotation of the wheels and the desired gear-mechanism states to control the two clutches (42, 44), which are situated on the intermediate shaft (40), and also the electrical machine (32).

6. Drive assembly according to Claim 1, **characterized in that** the electronic control unit (50) uses the information on the speed of rotation of the engine, the speeds of rotation of the wheels and the desired gear-mechanism states to control the two clutches (28, 30) and also the electrical machine (32).

7. Drive assembly according to Claim 2, **characterized in that** an electronic control unit (50) uses the information on the speed of rotation of the engine, the speeds of rotation of the wheels and the desired gear-mechanism states to control the clutch (31) and also the electrical machine (32).

8. Drive assembly according to Claim 1, **characterized in that** the electrical machine (32) can be connected to the gear-mechanism input shaft (20) in such a manner via at least one controllable clutch that, in the event of a changing-down of the gears, it acts as an electric motor and accelerates the respectively more slowly running gearwheel of the pair of gearwheels to be connected, or, in the event of a changing-up of the gears, acts as a generator and reduces the speed of the respectively more rapidly running gearwheel, for the purpose of synchronizing the main gear mechanism (18).

9. Drive assembly according to one of the preceding claims, **characterized in that** the electrical machine (32) can be connected to the gear-mechanism input shaft (20) via an intermediate gear mechanism (34) in such a manner that the transmission speeds of the intermediate gear mechanism (34), and hence the mass moment of inertia of the electrical machine (32), can be selected to correspond to the desired matching of the speed of rotation of the gear-mechanism input shaft (20), for the purpose of synchronizing the main gear mechanism (18).

10. Drive assembly according to one of the preceding claims, **characterized in that** the liquid cooling of the electrical machine (32) is ensured by connecting it to the water cooling circuit of the internal combustion engine (12).

11. Drive assembly according to one of the preceding claims, **characterized in that** the electrical machine (32) is air-cooled by means of a built-on or externally mounted cooling fan.

12. Drive assembly according to one of the preceding claims, **characterized in that** the lubrication of the electrical machine (32) takes place by means of oil lubrication by the gear oil of the main gear mechanism (18).

## Revendications

1. Groupe d'entraînement d'un véhicule automobile équipé d'un moteur à combustion interne et d'une boîte de vitesses coopérant avec les roues motrices du véhicule,
l'arbre d'entrée de la boîte de vitesses pouvant être couplé à l'arbre de sortie du moteur à combustion interne et à une machine électrique couplée à la boîte de vitesses par une boîte de vitesses intermédiaire et qui commute entre son état de fonctionnement comme démarreur pour entraîner le moteur à combustion interne et celui de fonctionnement comme générateur pour alimenter électriquement le réseau embarqué du véhicule,
l'arbre de sortie (14) du moteur à combustion interne (12) et l'arbre d'entrée (20) de la boîte de vitesses principale (18) ainsi que la machine électrique (32) sur la boîte de vitesses intermédiaire (34) pouvant être accouplés l'un l'autre à l'aide d'au moins un embrayage commandé (28, 30, 31, 37, 42, 44),
**caractérisé en ce que**
l'arbre de sortie (14) du moteur à combustion interne (12) et l'arbre d'entrée (20) de la boîte de vitesses principale (18) peuvent être couplés chaque fois à une masse d'inertie (24) par un embrayage (28, 30), ce volant pouvant recevoir une énergie suffisante pour un démarrage impulsionnel du moteur à combustion interne et
la masse d'inertie (24) est en prise avec la boîte de vitesses intermédiaire (34).

2. Groupe d'entraînement selon la revendication 1,
**caractérisé en ce que**
l'arbre de sortie (14) du moteur à combustion interne (12) et l'arbre d'entrée (20) de la boîte de vitesses principale (18) sont couplés entre eux par un embrayage (31) et un volant d'inertie (27),
la machine électrique (32) étant en prise de coopération en permanence avec l'arbre d'entrée (20) de la boîte de vitesses par une boîte de vitesses intermédiaire commutable (34).

3. Groupe d'entraînement selon la revendication 2,
**caractérisé en ce que**
la boîte de vitesses intermédiaire commutable (34) comporte au moins deux étages de boîte de vitesses et une position neutre.

4. Groupe d'entraînement selon la revendication 1,
**caractérisé en ce que**
la machine électrique (32) coopère avec un arbre intermédiaire (40) qui peut être mis en prise par deux embrayages commandés (42, 44) à rapport de démultiplication différent, avec l'arbre d'entrée (20) de la boîte de vitesses.

5. Groupe d'entraînement selon la revendication 4,
**caractérisé en ce qu'**
à partir des informations concernant la vitesse de rotation du moteur, la vitesse de rotation des roues et l'état souhaité de la boîte de vitesses, un appareil de commande électronique (50) commande les deux embrayages (42, 44) se trouvant sur l'arbre intermédiaire (40) ainsi que la machine électrique (32).

6. Groupe d'entraînement selon la revendication 1,
**caractérisé en ce que**
l'appareil de commande électronique (50) commande les deux embrayages (28, 30) ainsi que la machine électrique (32) à partir des informations concernant la vitesse de rotation du moteur, la vitesse de rotation des roues et l'état souhaité pour la boîte de vitesses.

7. Groupe d'entraînement selon la revendication 2,
**caractérisé en ce qu'**
à partir des informations concernant la vitesse de rotation du moteur, les vitesses de rotation des roues et l'état souhaité de la boîte de vitesses, un appareil de commande électronique (50) commande l'embrayage (31) ainsi que la machine électrique (32).

8. Groupe d'entraînement selon la revendication 1,
**caractérisé en ce que**
la machine électrique (32) est couplée par au moins un embrayage commandé à l'arbre d'entrée (20) de la boîte de vitesses de façon à ce que pour synchroniser la boîte de vitesses principale (18), lors d'une rétrogradation de vitesse, la machine fonctionne comme moteur électrique pour accélérer la roue la plus lente de la paire de roues dentées à coupler et qu'en cas de montée de rapport, la machine fonctionne comme générateur pour freiner la roue dentée tournant le plus rapidement.

9. Groupe d'entraînement selon l'une quelconque des revendications précédentes,
**caractérisé en ce que**
la machine électrique (32) est couplée par une boîte de vitesses intermédiaire (34) à l'arbre d'entrée (20) de la boîte de vitesses pour qu'en vue de synchroniser la boîte de vitesses principale (18), les rapports de démultiplication de la boîte de vitesses intermédiaire (34) et ainsi le moment d'inertie de la machine électrique (32) puissent être choisis en fonction de l'adaptation souhaitée de la vitesse de l'arbre d'entrée (20) de la boîte de vitesse.

10. Groupe d'entraînement selon l'une quelconque des revendications précédentes,
**caractérisé en ce que**
le refroidissement par liquide de la machine électrique (32) est assuré par un branchement sur le circuit d'eau de refroidissement du moteur à combustion interne (12).

11. Groupe d'entraînement selon l'une quelconque des revendications précédentes,
**caractérisé en ce que**
la machine électrique (32) est refroidie à l'air à l'aide d'un ventilateur intégré ou monté de manière externe.

12. Groupe d'entraînement selon l'une quelconque des revendications précédentes,
**caractérisé en ce que**
le graissage de la machine électrique (32) se fait à l'aide de l'huile de graissage de la boîte de vitesses principale (18).
